# EUROPÄISCHE PATENTANMELDUNG

(11) **EP 1 916 207 A1**
(43) Veröffentlichungstag der Anmeldung: **30.04.2008**
(21) Anmeldenummer: 07405291.1
(22) Anmeldetag: 02.10.2007
(51) Int. Cl.: B65G 65/46, G01F 13/00

(54) **Dosiersystem zum präzisen Austragen feiner Pulver aus einem fluidisierten Pulverbehälter mittels Schneckenförderer**

(30) Priorität: 06.10.2006 CH 15922006
(71) Anmelder: Seiler, Daniel, 8645 Jona (DE)
(72) Erfinder: Seiler, Daniel, 8645 Jona (CH)

(57) **Zusammenfassung**

Dosiersystem zum Austragen feiner Pulver aus einem fluidisierten Pulverbehälter (1), bestückt mit einer oder mehreren Schneckenförder- Einheiten (2), deren Einlauf stets mit unfluidisiertem Pulver (1.2) bedeckt ist und die Fördermenge somit unabhängig vom aufwärts strömenden fluidisierten Pulver (1.1) wird.

## Beschreibung

### Stand der Technik

Die exakte und zuverlässige Verteilung , Dosierung und Förderung feiner Pulver, z.B. für die Herstellung oder Abfüllung chemischer, pharmazeutischer oder metallurgischer Produkte oder auch von Nahrungsmitteln oder Pulverlacken mit einer Körnung von 5 - 100 my ist problematisch , weil feine Pulver zu Klumpenbildung neigen und schlecht rieseln.
In der chemischen, pharmazeutischen, metallurgischen oder auch Nahrungsmittelindustrie erfolgt die Dosierung heute meistens aus einem unfluidisierten , meist konischen oder trapezförmigem Behälter. Im unteren Bereich ist ein Schneckenförderer (SF) angebracht, der das Pulver aus dem Behälter fördert. Müssen feine Pulver dosiert werden, so werden Rührwerke (SR), und/oder Vibratoren (VB) gemäss FIG. A oder auch Paddel, Schlagbolzen , Luftkissen , Gleitbeschichtungen etc. eingesetzt, um das feine Pulver bis zum Einlauf des Schneckenförderers (SF) zu bringen.

Alle diese Systeme haben aber den Nachteil, dass das feine Pulver über dem Einlauf der Förderschnecke verdichtet und die Rieselfähigkeit feiner Pulver durch Rühren, Vibrieren, Paddeln oder Schlagen etc. weiter verschlechtert wird. Dies erfordert starke Antriebe für Rührwerk und Schneckenförderer und die hohen Kräfte können zur mechanischen oder thermischen Zerstörung des Pulvers führen. Je mehr gerührt, vibriert , geschlagen oder gepaddelt wird , umso schwieriger wird eine schonende und konstante Pulverförderung.

In der Pulverlackiertechnik hat man schon längst erkannt, dass feine Pulver am besten in einem fluidisierten Behälter aufgelockert werden. Dieses Auflockern kann in einem Behälter mit porösem Boden , auch Fluid- Platte (FP) genannt , erfolgen. Dabei wird sogenannte Fluid - Luft (FA) durch den porösen Boden geblasen und das Pulver wird fluidisiert oder fliessbar gemacht. Das feine Pulver wird meistens über ein Saugrohr (ST), an dessen Ende sich ein Pulver- Injektor (PI) befindet , mit der Förderluft ((CA) aus dem Pulverbehälter (PC) gesaugt und als Gemisch von Pulver und Luft (PA) weitergefördert. Allerdings ist die Fördermenge stark abhängig von Füllgrad oder Druck im Pulverbehälter (PC) und vom Verschleiss im Pulver- Injektor (PI). Die Pulverbehälter (PC) sind zwar meistens mit einer Entlüftung (AE) ausgerüstet, d. h. es wird ein leichter Unterdruck im Pulverbehälter (PC) erzeugt. Schon geringe Druckschwankungen können den Pulverfluss stark beeinträchtigen. Diese können entstehen, wenn Pulver nachgefüllt wird, wenn der Fluiddruck verändert werden muss oder wenn der Entlüftungsdruck ändert. In FIG. B ist ein solches Injektor- Pulverfördersystem dargestellt.

Bei Pulverförderung mittels Pulver- Injektoren (PI) wird die Fördermenge im wesentlichen durch die Förderluft (CA) bestimmt. Um Ablagerungen im Pulverschlauch (PH) zu verhindern, soll die Geschwindigkeit des Pulvers eine bestimmte Geschwindigkeit nicht unterschreiten. Andererseits soll die Geschwindigkeit auch nicht zu hoch sein, damit es nicht zu Ansinterungen im Pulverschlauch (PH) kommt oder zu hoher Austrittsgeschwindigkeit am Schlauchende. Daher soll die Geschwindigkeit des Pulvers im Pulverschlauch (PH) auch bei veränderlicher Fördermenge konstant gehalten werden. Desswegen wird zusätzlich noch eine Dosierluft (DA) eingesetzt, d.h. wird die Fördermenge über die Förderluft (CA) verändert, so muss auch die Dosierluft (DA) angepasst werden. Dafür wurden spezielle Systeme zur Luftmengenregelung (AC) entwickelt. Damit wird zwar die Gesamtluftmenge und die Luftgeschwindigkeit im Pulverschlauch (PH) geregelt , aber nicht die Pulvermenge. In FIG. C ist ein solches System dargestellt.
Neuerdings wird versucht , die Nachteile der Pulverförderung mittels Pulver- Injektoren (PI) durch Kolben- oder Membranpumpen oder sogar Schlauchpumpen zu verbessern. Diese Systeme sind eigentlich bekannt aus der Förder- und Dosiertechnik für flüssige oder gasförmige Medien. Mit viel Aufwand und Luftunterstützung sind diese Systeme auch für Pulver einsetzbar. Dabei wird abwechslungsweise Pulver aus einem Pulverbehälter (PC) angesaugt und anschliessend ausgestossen. Diese Systeme neigen aber zu Pulsation des Pulverflusses. Solche Systeme werden unter Patentschrift DE 102 61 053 , EP 1427536, EP 1 106 547, EP 0 124 933 , US 2005019106 beschrieben. In FIG. D ist ein solches taktendes Pulverfördersystem mit 2 Pulverkolben (PP) und 4 Pulverventilen (PV) dargestellt.

Naheliegender ist der Einsatz eines Schneckenförderers (SF) für die Förderung und Dosierung von feinen Pulvern. Dieser fördert weitgehend pulsationsfrei. Wichtig ist aber , dass das Pulver möglichst konstant in den Einlauf der Förderschnecke fliesst. Dies ist mittels Rühren, Vibrieren, Schlagen, Paddeln etc. kaum möglich. Deswegen werden bei der Verarbeitung von feinen Pulvern in der chemischen, pharmazeutischen oder auch Nahrungsmittelindustrie vermehrt Fluidisierungshilfen eingesetzt. Meistens wird aber noch ein konischer oder trapezförmiger Behälter eingesetzt, und es wird oberhalb der Förderschnecke , meist lokal , fluidisiert. Dies kann zu Druckblasen führen, die eine konstante Förderung verunmöglichen.

### Darstellung der Erfindung

Bei allen Ansprüchen dieser Patenschrift werden die Vorteile des fluidisierten Behälters, wie er in der Pulverlackiertechnik schon lange eingesetzt wird, mit dem Vorteil der kontinuiertlichen Fördereigenschaften des Schneckenförderers aus der chemischen, pharmazeutischen, metallurgischen oder Nahrungsmittelindustrie vereint.

Die Vorteile des fluidisierten Pulverbehälters sind insbesondere:
- klar definierbarer Füllstand , ähnlich wie bei Wasser
- gute Vermischung des Pulvers, z.B. Frischpulver und zurückgewonnenes Pulver
- gleichmässige Verteilung des Pulvers auf mehrere Schneckenförderer möglich z.B. für das Versprühen oder Abfüllen

Die Vorteile des Schneckenförderers sind insbesondere :
- pulsationsfreies Fördern
- einfache Steuerung, Regelung

In Versuchen wurde festgestellt, dass die Fördermenge beim fluidisierten Pulverbehälter (1) stark durch die Fluid- Luft (FA) beeinträchtigt wird. Durch die Fluid- Luft (FA) entsteht ähnlich wie bei siedendem Wasser eine Aufwärts- Strömung. Dieses aufwärts strömende, fluidisierte Pulver (1.1) erzeugt im Bereich des Einlaufes der Schneckenförder- Einheit (2) Turbulenzen und es kann Pulver durch die aufströmende Luft mitgerissen werden. Dies verunmöglicht eine konstante Förderung. Der Pulvereinlauf der Schneckenförder- Einheit (2) muss daher so geformt oder angeordnet sein , dass er nicht durch fluidisiertes Pulver (1.1) beeinträchtigt wird, d.h. es braucht über dem Einlauf der Schneckenförder-Einheit eine Zone mit unfluidisiertem Pulver (1.2).

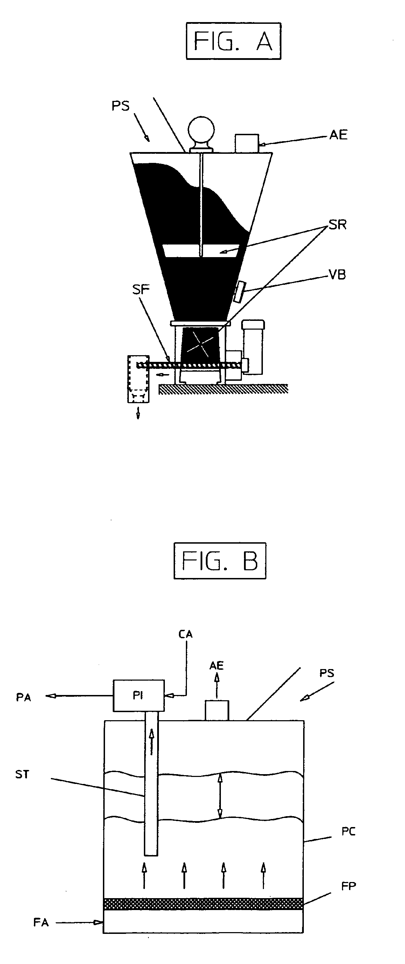

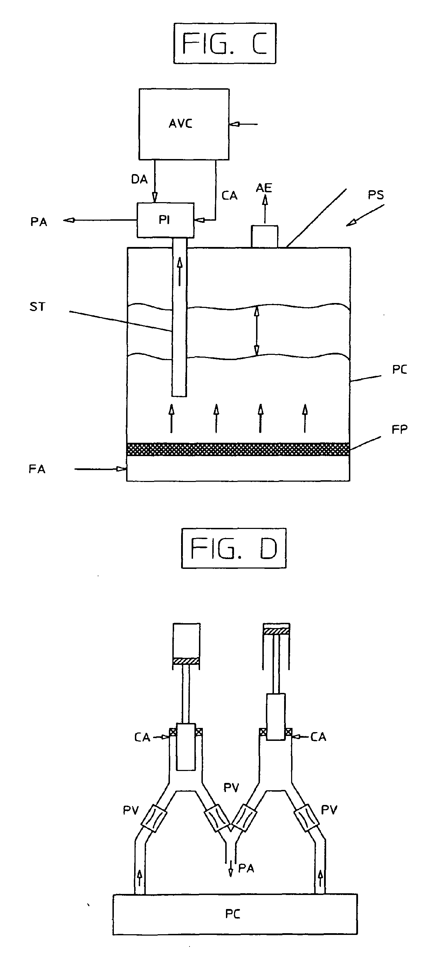

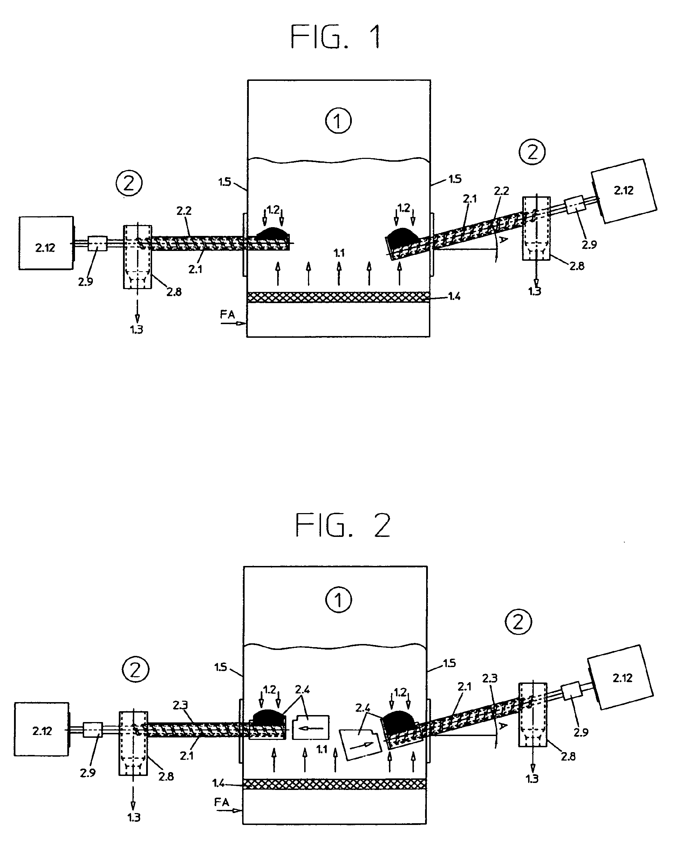

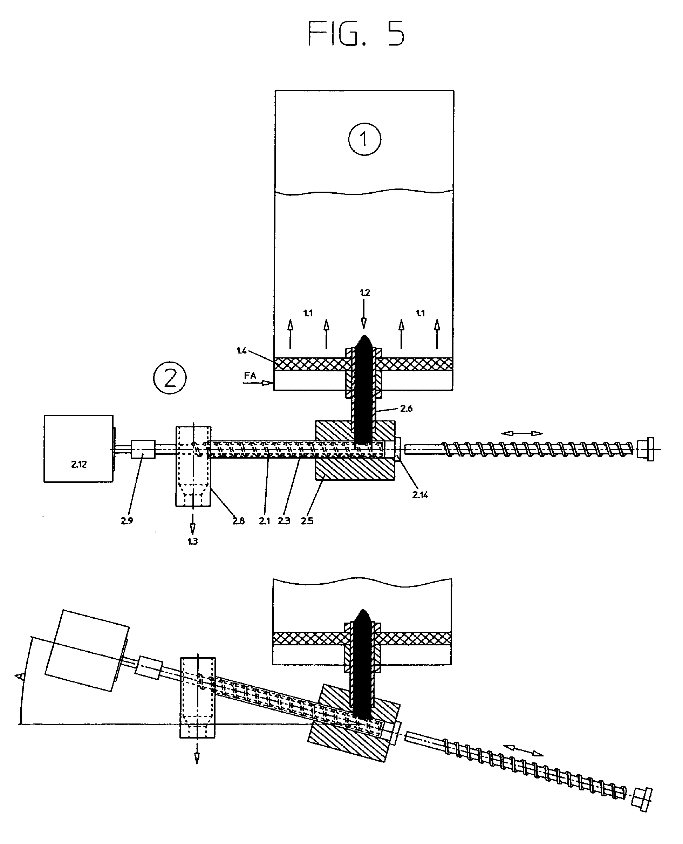

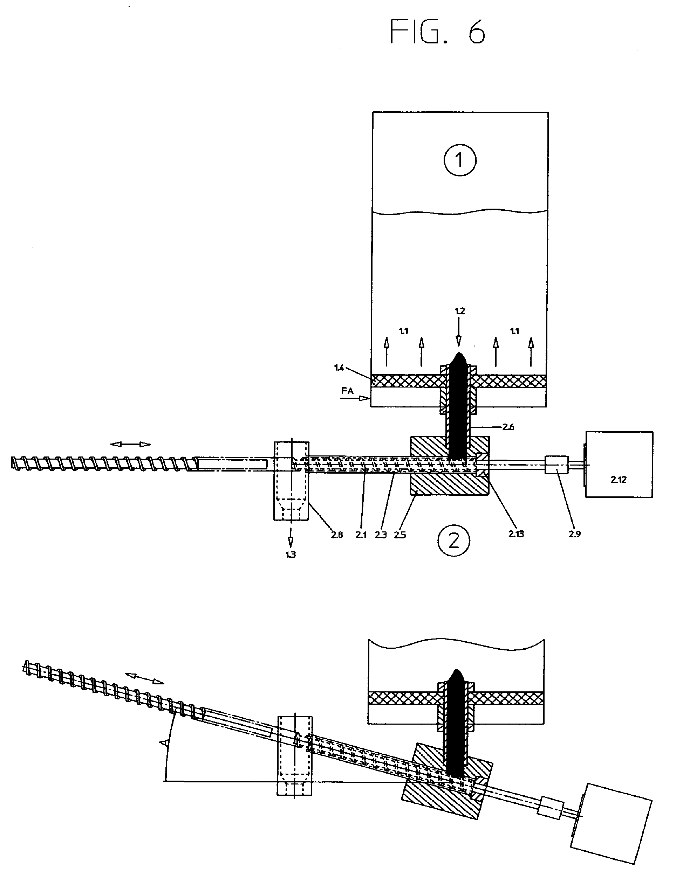

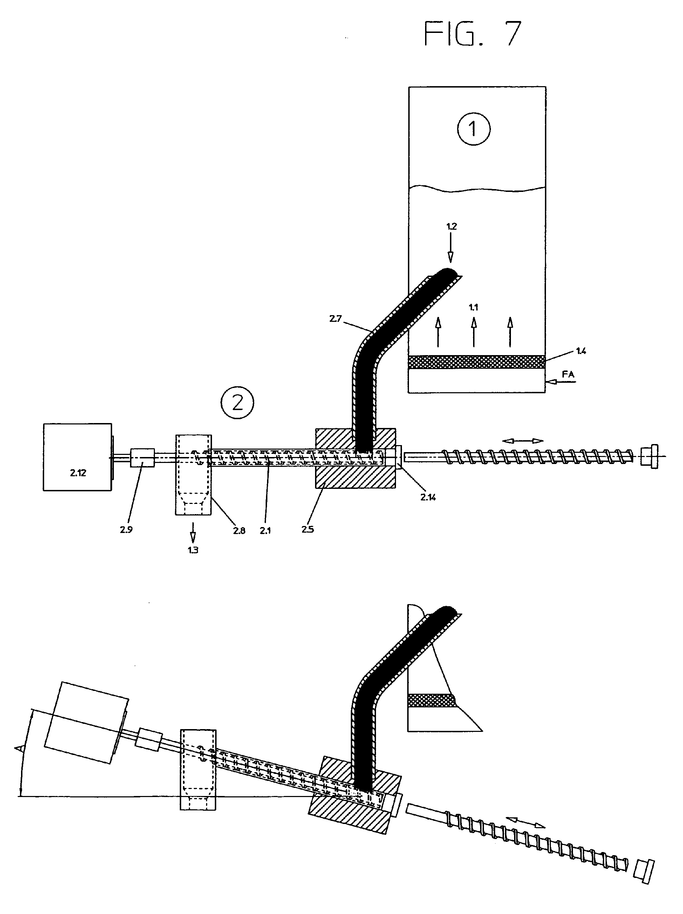

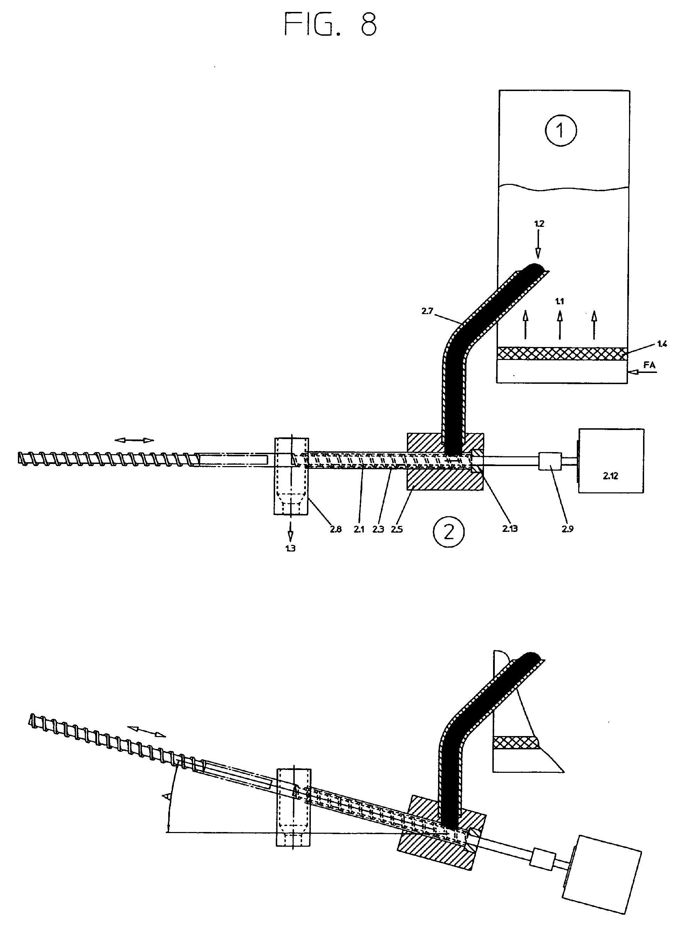

Pulver kann im wesentlichen auf 3 Arten mittels Schneckenförder- Einheiten (2) aus einem fluidisierten Pulverbehälter (1) gefördert werden :
- durch die Seitenwand (1.5) des Pulverbehälters (1) gemäss FIG.1 bis 4
- mit geradem Einlaufrohr (2.6) durch die Fluid - Platte (1.4) gemäss FIG. 5 und 6
- mit gekröpftem Einlaufrohr (2.7), das durch die Seitenwand (1.5) der fluidisierten Pulverbehälters (1) geführt wird gemäss FIG. 7 und 8

Bei allen 3 Varianten muss darauf geachtet werden, dass der Einlaufbereich der Förderschnecke (2.1) kontinuierlich mit unfluidisiertem Pulver (1.2) versorgt wird.

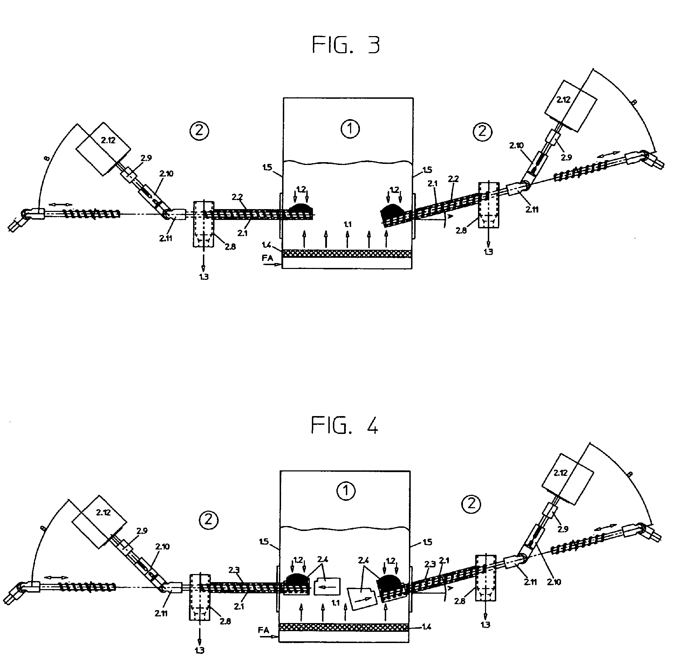

Im Anspruch 1 , FIG. 1 und Anspruch 3, FIG. 3 wird dies durch die trichterförmige Gestaltung des Einlaufs des Förderrohrs (2.2) sichergestellt.
Im Anspruch 2, FIG. 2 und Anspruch 4 , FIG. 4 wird ein separater Einlauftrichter (2.4) auf das Förderrohr (2.3) gesteckt.
In Anspruch 5, FIG. 5 und Anspruch 6, FIG. 6 wird dies durch das gerade Einlaufrohr (2.6) sichergestellt, in Anspruch 7, FIG. 7 und Anspruch 8 , FIG. 8 durch ein gekröpftes Einlaufrohr (2.7).

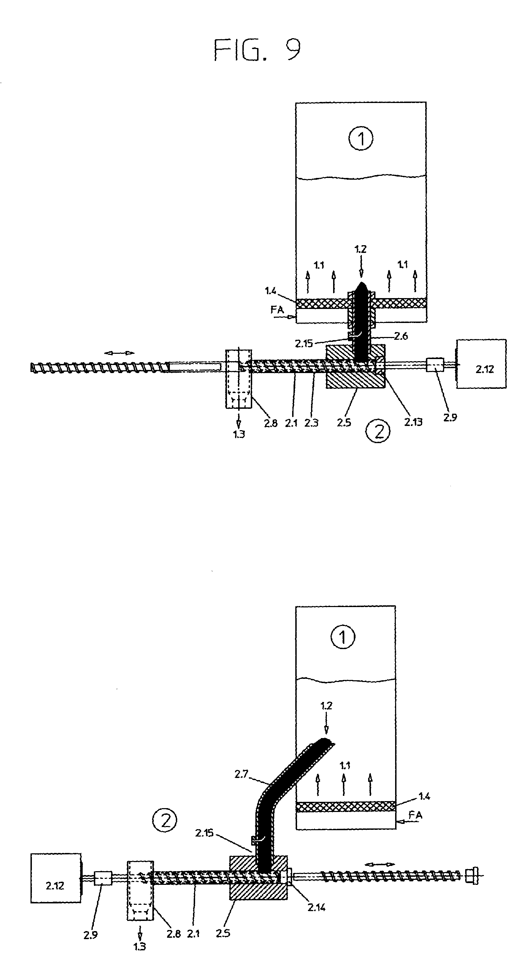

Allerdings kann die Pulversäule des unfluidisierten Pulvers (1.2) insbesondere bei den Ansprüchen 5 - 8 auch zu hoch sein, sodass es zu Verstopfungen im Einlaufrohr (2.6 resp. 2.7) kommen kann. Dies wird auf einfache Art gelöst, indem gemäss Anspruch 9, FIG. 9 das Einlaufrohr (2.6 resp. 2.7) mit einem Fluid- Luftanschluss (2.15) versehen wird, der das unfluidisierte Pulver (1.2) vor dem Einlauf der Förderschnecke (2.1) lokal etwas auflockert, wenn dies notwendig ist.

Durch Neigung (Winkel A) der Schneckenförder- Einheit (2) kann die Pulvermenge ebenfalls leicht beeinflusst werden. Im Normalfall wird die Schneckenförder- Einheit (2) eher nach oben geneigt. Damit wird verhindert, dass Pulver von alleine aus dem Förderrohr (2.3) fliesst und das Anlaufen und Stoppen des Pulverflusses ist schärfer begrenzt. Mit den Ansprüchen 1 - 9 wird sichergestellt, dass die Fördermenge in einem hohem Masse konstant ist.

Da das Pulver im fluidisierten Behälter (1) nicht verdichtet wird, ist nicht nur der Leistungsbedarf für die Schneckenförder- Einheit (2) gering, sondern auch der Verschleiss. Nichtsdestotrotz ist es wichtig , dass die Förderschnecke (2.1) leicht austauschbar ist , sei es wegen Wartung oder Pulverwechsel.

Da die Antriebsachse und die Schneckenachse gemäss Anspruch 3 und 4 abgewinkelt sind, (Winkel B) ist die Förderschnecke (2.1) mit der Schnellkupplung (2.10) in Sekunden freigelegt. Mit der flexiblen Kupplung (2.9) werden allfällige Fehler in der Achsausrichtung kompensiert.

In den Ansprüchen 5 und 7 ist der Schneckenantrieb (2.12) so angeordnet, dass das Pulver horizontal oder auch geneigt (Winkel A) aus dem Einlaufstück (2.5) gefördert wird, und zwar ziehend. Für den Austausch der Förderschnecke muss ein Stopfen (2.14) entfernt werden.

In den Ansprüchen 6 und 8 ist der Schneckenantrieb (2.12) stossend angeordnet. Dies hat allerdings den Nachteil, dass die rotierende Förderschnecke (2.1.) zum Schneckenantrieb (2.12) hin abgedichtet werden muss mit einer Laufdichtung (2.13). Die Abdichtung von rotierenden Teilen ist aber bei sehr feinen Pulvern problematisch.

Einen weiteren Beitrag zur Konstanz des Pulverflusses kann eine exakte Einhaltung des Füllstandes sowie eine möglichst luftarme Versorgung des Pulverbehälters (1) mit neuem Pulver aus dem Vorratsbehälter (3.1) leisten, obschon der Pulverfluss durch das konstante Anhäufen von unfluidisiertem Pulver (1.2) über dem Einlauf der Schneckenförder-Einheit (2) weitgehend unabhängig vom Füllstand oder vom Druck im Pulverbehälter wird.

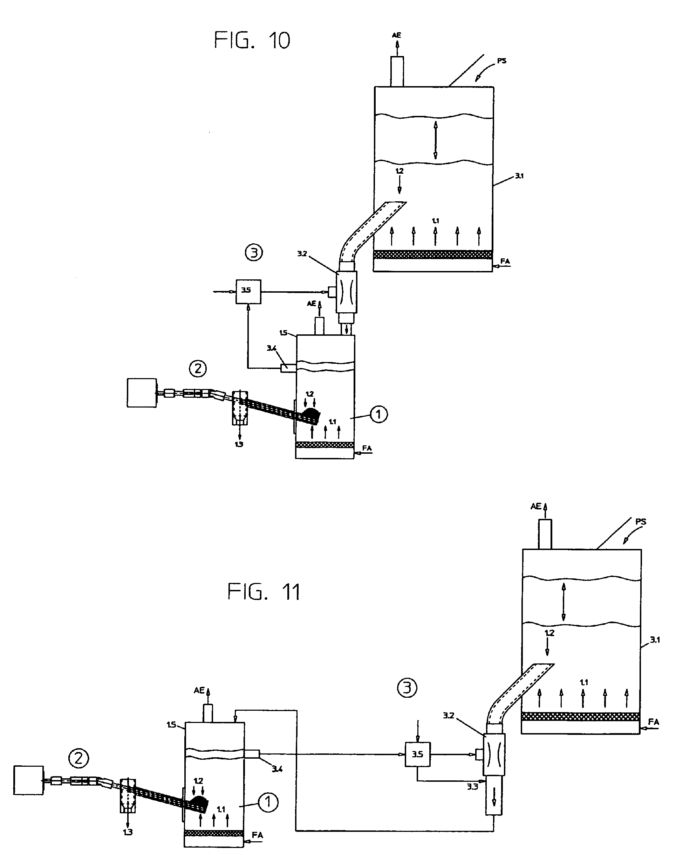

In Anspruch 10, FIG. 10 wird nichtsdestotrotz ein Dosiersystem beschrieben, bei dem nicht nur dafür gesorgt wird, dass der Einlauf zur Förderschnecke stets mit unfluidisiertem Pulver belegt wird, sondern auch der Füllstand geregelt wird und die Zufuhr von neuem Pulver nach dem Schwerkraft- Prinzip mit Hilfe eines Pulverventils (3.2) erfolgt, indem der Vorrats-Pulverbehälter (3.1) über dem Pulverbehälter (1) mit der Schneckenförder- Einheit (2) angeordnet wird. Die Pulverversorgung erfolgt einfach indem das Pulverventil (3.2) öffnet, wenn der Füllstandssensor (3.4) anzeigt, dass der Füllstand zu tief ist. Das Pulverventil (3.2) wird mit der Füllstand- Steuerung (3.5) gesteuert.

In Anspruch 11 , FIG. 11 erfolgt der Pulvernachschub mittels Pfropfenförderung. Öffnet das Pulverventil (3.2), so fällt Pulver in das Rohr unterhalb des Pulverventils (3.2). Anschliessend schliesst das Pulverventil (3.2) und der Pulverpfropfen wird über den Förderluftanschluss (3.3) durch den Pulverschlauch in den Pulverbehälter (1) gefördert. Dieser Vorgang wird so oft wiederholt, bis der Füllstand- Sensor (3.4) anzeigt, dass der Füllstand erreicht ist. Das Pulverventil (3.2) sowie die Förderluft (CA) wird über die Füllstand- Steuerung (3.5) gesteuert. Es handelt sich somit um eine pulsierendes Pulvertransfersystem. Bei der Pfropfenförderung ist wenig Luft im Einsatz, die Pulverförderung erfolgt mittels Druck und nicht so sehr durch Geschwindigkeit, wie beim Pulver- Injektor (PI) .

Unter Anspruch 1-11 werden Dosiersysteme zum Austragen feiner Pulver aus einem fluidisierten Behälters (1) mit mehreren Schneckenförder- Einheiten (2) beschrieben. Eine Pulverfluss - Messung oder Regulierung ist noch nicht enthalten. Die Kombination von fluidisiertem Behälter (1) und Schneckenförder- Einheit (2) ermöglicht bei feinen Pulvern eine Dosiergenauigkeit von besser als 1 %. Zudem ist das System sehr linear, d.h. die Drehzahl ist direkt proportional zum Pulverausstoss, sofern die unter Anspruch 1 - 11 beschriebenen Punkte beachtet werden. Diese Systeme sind also sehr präzise und eine kontinuierliche Messung und Regelung des Pulverflusses oder eine diskontinuierliche Messung einer Abfüllmenge ist daher in vielen Anwendungsfällen nicht zwingend.

Schneckenförderer sind eigentlich volumetrische Dosiergeräte . Da Pulver unterschiedliche Dichten haben können und zudem kompressibel sind, interessiert vor allem die gravimetrische Dosierung. Eine gravimetrische Dosierung kann aufgrund der hohen Fördergenauigkeit und Zuverlässigkeit der beschriebenen Systeme auch über eine einfache Kalibrierung erzielt werden. Wird der Schneckenantrieb (2.12) mit einer Timer-Steuerung (4.2) ausgerüstet, so kann der Pulver- Durchfluss d.h. Gewicht pro Zeiteinheit bei jeder Drehzahl sehr genau ermittelt werden. Ebenso ist es möglich, über Zeit und Drehzahl eine bestimmte Pulvermenge in Gewicht zu kalibrieren, d.h. abzufüllen.

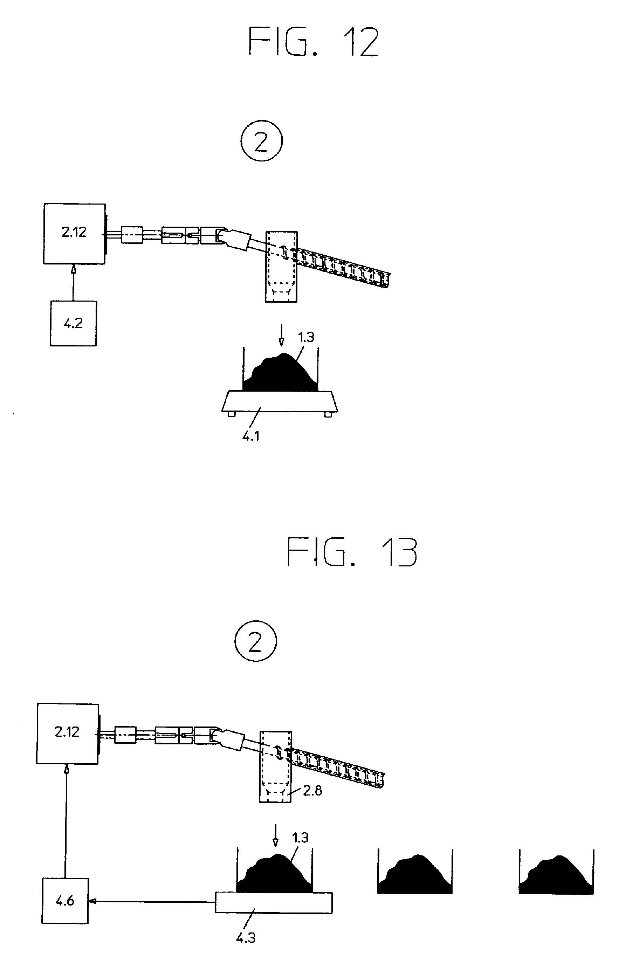

Unter Anspruch 12, FIG. 12 wird daher ein Dosiersystem nach Anspruch 1 -11 beschrieben, bei dem der Schneckenantrieb (2.12) für Kalibrier- oder Abfüllzwecke mit der Timer - Antriebssteuerung (4.2) ausgerüstet ist und der Pulver- Fluss oder eine bestimmte Pulvermenge ausgangs Auslaufrohr (2.8) mit einer Kalibrierwaage (4.1) ermittelt wird.
Die Kalibrierung nach Anspruch 12 ist sehr einfach und schnell, da das Pulver ohne Luftunterstützung im freien Fall durch das Auslaufrohr (2.8) in einen Behälter auf der Kalibrierwaage (4.1) fällt. Bei der Kalibrierung geht man davon aus, dass das System zuverlässig und präzise dosiert, denn der Pulverfluss oder die Pulvermenge wird nicht automatisch geregelt. Es handelt sich hier um einen offenen Regelkreis (Open-Loop) oder eine Steuerung.

Die Prozesssicherheit kann natürlich weiter erhöht werden, indem der Pulverfluss oder die Fördermenge gemessen und geregelt wird .

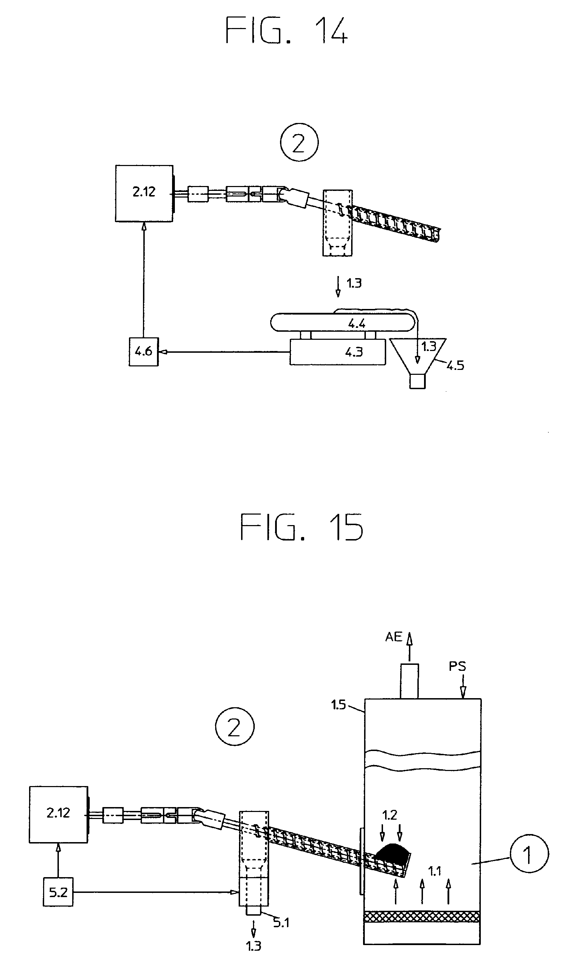

In Anspruch 13, FIG. 13 misst die Wiegezelle (4.3) am Ausgang des Auslaufrohres (2.8) das Gewicht und die Antriebsregelung (4.6) regelt den Schneckenantrieb (2.12). Dabei wird die Gewichtszunahme am Ausgang des Auslaufrohres (2.8) von jeder Schneckenförder- Einheit (2) mit der Wiegezelle (4.3)) gemessen . Dies ist eigentlich Stand der Technik, aber nicht im Zusammenhang mit den Ansprüchen 1 - 11 . Dieses System eignet sich sowohl für einen oder mehrere Schneckenförder- Einheiten (2), aber nur für den diskontinuierlichen Betrieb, z.B. für das Abfüllen (Batching)
Etwas aufwendiger ist die kontinuierliche gravimetrische Durchfluss- Mengenregelung nach Anspruch 14, FIG. 14. Dabei wird die Pulverfluss- Menge ausgangs Auslaufrohr (2.8) auf dem Förderband (4.4) mit der Wiegezelle (4.3) kontinuierlich gemessen und die Antriebsregelung (4.6) regelt den Schneckenantrieb (2.12). Das Pulver fällt anschliessend in den Trichter (4.4), von wo aus das dosierte Pulver (1.3) weitergefördert oder verarbeitet wird. Auch dies ist eigentlich Stand der Technik, nicht aber im Zusammenhang mit den Ansprüchen 1 -11. Dieses System eignet sich für eine oder mehrere Schneckenförder-Einheiten (2) im kontinuierlichen Betrieb, z.B. für das Versprühen von feinen Pulvern.

Anstatt über eine Gewichtsmessung kann der Pulverfluss aber auch über ein optisches, kapazitives oder induktives Messsysteme überwacht und oder geregelt werden. Für eine gravimetrische Messung oder Regelung muss das System aber kalibriert werden wie unter Anspruch 12 beschrieben. Da das Pulver beim Auslaufrohr (2.8) in stark konzentrierter Form strahlförmig im freien Fall herunterfällt, bietet sich aber der Einbau eines optischen, induktiven oder kapazitiven Sensors (5) nach Anspruch 15, FIG. 15 geradezu an, wobei dessen Signale für Überwachungs- oder Regelzwecke eingesetzt werden, indem Alarm ausgelöst wird, wenn zu wenig Pulver fliesst oder der Schneckenantrieb (2.11) mit der Pulverfluss- Regelung (6) geregelt wird. Dieses System eignet sich daher vor allem bei Einsatz mehrerer Schneckenförder- Einheiten (2). Bei vielen eingangs beschriebenen Dosiersystemen wird zwar auch geregelt, z. B. eine Luftmenge , Drehzahl oder Anzahl Hübe, aber nicht aufgrund von Signalen eines Durchfluss- Sensors. Dieser kommt der gravimetrischen Messung sicher am nächsten, denn eine Luftmenge, Drehzahl oder Anzahl Hübe sind keine Garantie , dass auch Pulver fliesst.

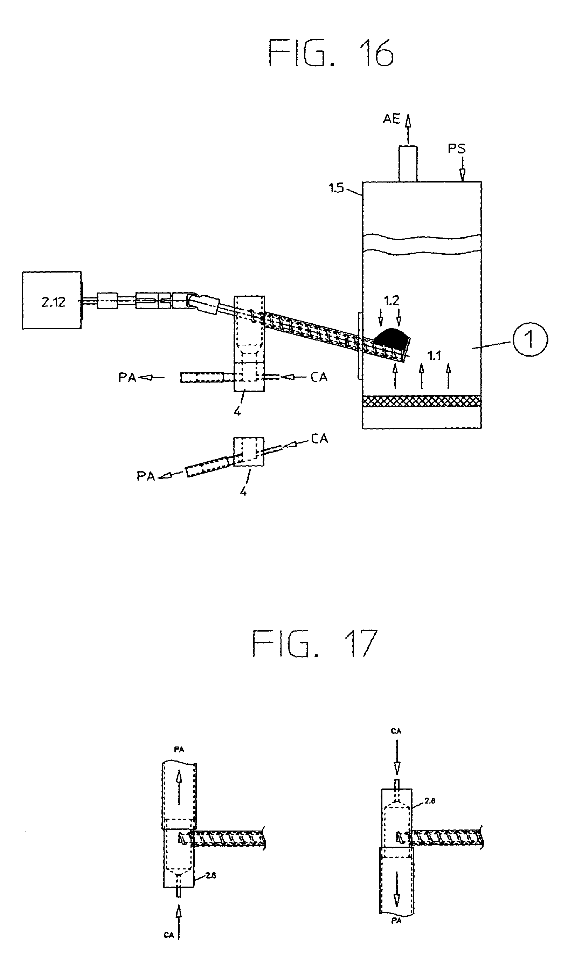

Bei dem in dieser Patentschrift beschriebenen Dosiersystem mit fluidisiertem Pulverbehälter (1) und Schneckenförder- Einheit (2) wird die Fördermenge durch die Drehzahl der Schneckenförder- Einheit (2) bestimmt. Gemäss Anspruch 16, FIG. 16 wird am Auslaufrohr (2.8) der Schneckenförder- Einheit (2) eine Pulverpumpe (4) quer oder geneigt zur Achse des Auslaufrohres (2.8) installiert. Das dosierte Pulver (1.3) fällt im freien Fall in die Pulverpumpe (4). Die Saugwirkung durch die Förderluft (CA) ist dabei unerheblich. Es braucht auch keine Dosierluft (DA). Dieses System arbeitet daher mit weniger Luft als ein traditionelles Injektor-System.

Anstatt das Pulver quer zum Auslaufrohr (2.8) weiterzufördern wird in Anspruch 17, FIG. 17 die Förderluft (CA) sogar in Längsrichtung des Auslaufrohres (2.8) geblasen. Bei diesem System wird im Auslaufrohr (2.8) ein leichter Druck aufgebaut, der aber auch nicht allzu hoch sein darf, sonst entweicht der Druck durch das Förderrohr (2.3) und beeinträchtigt den Pulverfluss. Zudem ist es für diesen Fall besser ein Schneckenfördersystem nach Anspruch 6 und 8 mit stossender Pulverförderung einzusetzen. Mit der Druckunterstützung können Pulver über grössere Distanzen gefördert werden.

Die unter Anspruch 16 und 17 beschriebenen Systeme brauchen zwar weniger Luft als herkömmliche Injektorsysteme, sind aber im Druckaufbau begrenzt, und somit eher für Dünnstrom-Anwendungen und kurze Schläuche bis 20 m geeignet. Für den Transport von Pulvern über grössere Distanzen nach dem Dichtstrom- Prinzip braucht es aber grössere Drücke, die nur mit Schliessorganen realisiert werden können. Bereits erwähnt wurden die hinundherbewegenden Systeme mittels Pulverkolben (PP) und Pulverventilen (PV).

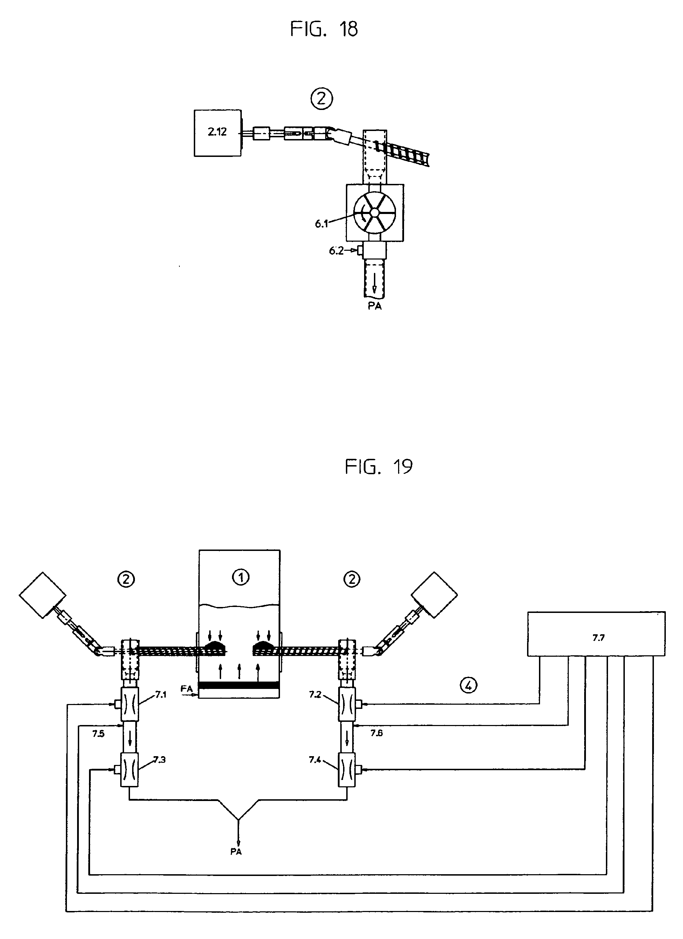

Um Pulver nach dem Dichtstrom- Prinzip zu fördern, kann unter das Auslaufrohr (2.8) auch eine rotierende Zellradschleuse (6.1) gesetzt werden gemäss Anspruch 18 , FIG. 18. Diese verhindert, dass dosiertes Pulver (1.3) zurückschlägt, wenn der Widerstand im Pulverschlauch zu gross wird, z.B. wenn der Pulverschlauch (PH) lang oder der Durchmesser klein ist. Die Förderluft (CA) wird unterhalb der Zellradschleuse (6.1) über den Förderluft-Anschluss (6.2) eingespeist. Das System neigt aber zu leichter Pulsation des Pulverflusses, wobei die Frequenz von der Drehzahl der Zellradschleuse (6.1) abhängig ist.

Etwas aufwendiger ist das in Anspruch 19, FIG. 19 beschriebene Dosiersystem. Bei diesem System werden zwei Schneckenförder- Einheiten (2) gebraucht. Aus zwei kontinuierlichen Pulverflüssen wird ein pulsierender Pulverfluss generiert. Ist das Pulverventil (7.1) geschlossen und das Pulver - Rückschlagventil (7.4) geschlossen, so kann dosiertes Pulver (1.3) mit der Förderluft (7.5) durch das geöffnete Pulver-Rückschlag- Pulverventil (7.3) ausgestossen werden. Gleichzeitig ist das Pulverventil (7.2) offen und wird von oben mit Pulver (1.3) durchflossen. Nun ändert der Zyklus. Das Pulverventil (7.2) schliesst, ebenso das Rückschlagventil-Pulverventil (7.3) und mit der Förderluft 7.6) wird das Pulver (1.3) ausgestossen.

Sowohl nach Anspruch 18 und 19 können Pulver über kurze oder grosse Distanzen bis 40 m nach dem Dichtstrom-Förderprinzip transportiert werden. In beiden Fällen nimmt man in Kauf, dass der Pulverfluss pulsiert. Bei längeren Pulverschläuchen erfolgt aber eine gewisse Glättung der Pulsation. Bei den unter Anspruch 18 und 19 erwähnten Systemen haben die Schliessorgane wie Zellradschleuse (6.1) und Pulverventile (7.1 und 7.2) keine Dosierfunktion, sondern lediglich eine Abschliessfunktion. Dies im Gegensatz zu den vorab erwähnten Kolben- oder Membran- Dosiersystemen.

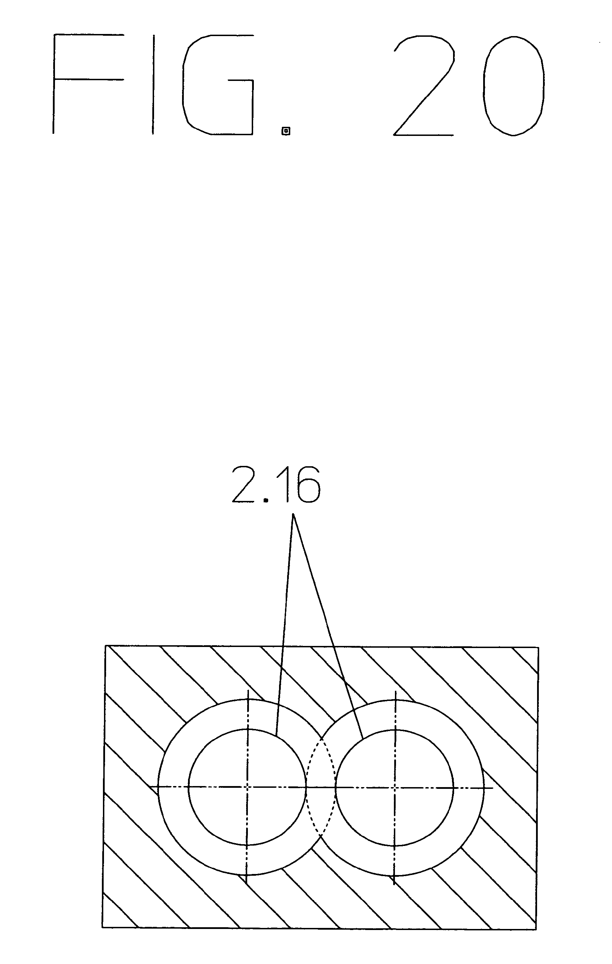

Normalerweise werden in der Pulverdosierung nur Einfach - Förderschnecken (2.1) eingesetzt. Für schwer fliessende Pulver werden in der Praxis manchmal auch DoppelSchnecken (2.16) verwendet. Da schwer fliessende Pulver gemäss Anspruch 1 - 19 eigentlich problemlos aus einem fluidisierten Behälter (1) gefördert werden können, ist eine Doppel-Schnecke (2.16) nicht unbedingt erforderlich. Nichtsdestotrotz wird in Anspruch 20, FIG. 20 auch dieser Patentschutz beansprucht.

In allen Ansprüchen 1- 20 wird davon ausgegangen, dass pro Pulverbehälter (1) mehrere Schneckenförder- Einheiten (2) eingesetzt werden, wie dies in der Pulverbeschichtung meistens der Fall ist. In der chemischen , pharmazeutischen, metallurgischen oder Nahrungsmittel-industrie ist es eher selten , dass mehrere Schneckenförder- Einheiten (2) aus dem gleichen Pulverbehälter (1) fördern. Um dieses Marktsegment abzudecken wird im Anspruch 21 der Patentschutz für alle vorhergehenden Ansprüche auch auf eine einzige Schneckenförder- Einheit (2) erweitert.

### Darstellungen

### A. Im Zusammenhang mit Stand der Technik

- FIG. A: Dosiersystem mit unfluidisiertem Behälter mit Schneckenförderer (SF) Rührwerk (SR) und Vibratoren (VB).
- FIG. B: Dosiersystem mit fluidisiertem Pulverbehälter (PC) und Pulver- Injektor (PI)
- FIG. C: Dosiersystem mit fluidisiertem Pulverbehälter (PC) und Pulver- Injektor (PI) und Luftmengenregelung (AC)
- FIG. D: Dosiersystem mit hinundher-bewegendem Kolben (PO) und Pulver- Ventil (PV)

### B. Im Zusammenhang mit Patentansprüchen

- FIG. 1: Dosiersystem mit Schneckenförder- Einheit (2) eingebaut in Seitenwand (1.5) des Pulverbehälters (1), Förderrohr (2.2) mit trichterförmigem Einlauf Schneckenachse horizontal oder nach oben oder unten geneigt Förderschnecke (2.1) ziehend
- FIG. 2: Dosiersystem mit Schneckenförder- Einheit (2) eingebaut in Seitenwand (1.5) des Pulverbehälters (1), Förderrohr (2.1) mit separatem Einlauftrichter (2.4) Schneckenachse horizontal oder nach oben oder unten geneigt Förderschnecke (2.1) ziehend
- FIG. 3: Dosiersystem mit Schneckenförder- Einheit (2) eingebaut in Seitenwand (1.5) des Pulverbehälters (1), Förderrohr (2.1) mit trichterförmigem Einlauf Schneckenachse horizontal oder nach oben oder unten geneigt Schneckenachse / Antriebsachse abgewinkelt mit Gelenk (2.11) Förderschnecke (2.1) ziehend, schnell ausbaubar
- FIG. 4: Dosiersystem mit Schneckenförder- Einheit (2) eingebaut in Seitenwand (1.5) des Pulverbehälters (1), Förderrohr (2.1) mit separatem Einlauftrichter(2.4) Schneckenachse horizontal oder nach oben oder unten geneigt Schneckenachse / Antriebsachse abgewinkelt mit Gelenk (2.11) Förderschnecke (2.1) ziehend, schnell ausbaubar
- FIG. 5: Dosiersystem mit Schneckenförder- Einheit (2) installiert unterhalb Fluid- Platte (1.4) des Pulverbehälters (1), gerades Einlaufrohr (2.6) Schneckenachse horizontal oder nach oben oder unten geneigt Förderschnecke (2.1) ziehend, schnell ausbaubar
- FIG. 6: Dosiersystem mit Schneckenförder- Einheit (2) installiert unterhalb Fluid- Platte (1.4) des Pulverbehälters (1), gerades Einlaufrohr (2.6) Schneckenachse horizontal oder nach oben oder unten geneigt Förderschnecke (2.1) stossend , schnell ausbaubar
- FIG. 7: Dosiersystem mit Schneckenförder- Einheit (2) installiert unterhalb Fluid- Platte (1.4) des Pulverbehälters (1), gekröpftes Einlaufrohr (2.7) Schneckenachse horizontal oder nach oben oder unten geneigt Förderschnecke (2.1) ziehend, schnell ausbaubar
- FIG. 8: Dosiersystem mit Schneckenförder- Einheit (2) installiert unterhalb Fluid- Boden (1.4) des Pulverbehälters (1), gekröpftes Einlaufrohr (2.7) Schneckenachse horizontal oder nach oben oder unten geneigt Förderschnecke (2.1) stossend , schnell ausbaubar
- FIG. 9: Dosiersystem mit Fluid- Luftanschluss (2.15) an Einlaufrohr (2.6) resp. (2.7) zur Auflockerung von unfluidisiertem Pulver (1.2)
- FIG.10: Dosiersystem mit Vorratsbehälter (3.1) und Schwerkraft-Füllstandregelung (3)
- FIG: 11: Dosiersystem mit Vorratsbehälter (3.1) und Pfropfenförder-Füllstandregelung (3)
- FIG. 12: Dosiersystem mit Timer - Antriebssteuerung (4.2) für Kalibrier/Abfüllzwecke
(continuous and discontinuous open loop control)
- FIG. 13: Dosiersystem mit Wiegezelle (4.3) und Pulvermengenregelung (4.6)
(discontinuous closed loop control)
- FIG. 14: Dosiersystem mit Förderband (4.4), Wiegezelle (4.3) und Pulverflussregelung (4.7)
(continuous closed loop control)
- FIG. 15: Dosiersystem mit optischem, induktivem oder kapazitivem Sensor (5.1) unterhalb des Auslaufrohres (2.8) und Pulverfluss- Überwachung oder Pulverflussregelung (5.2)
(continuous closed loop control)
- FIG.16: Dosiersystem mit Pulverpumpe (4) unterhalb Auslaufrohr (2.8) Pulverförderung quer oder geneigt zu Auslaufrohr (2.8)
- FIG. 17: Dosiersystem mit Luftanschluss (2.15) am Auslaufrohr (2.8) Pulverförderung längs Auslaufrohr (2.8)
- FIG. 18: Dosiersystem mit Zellenrad (6.1) und Förderluft - Anschluss (6.2)
- FIG. 19: Dosiersystem mit Pfropfen- Fördersystem (7)
- FIG. 20: Dosiersystem mit Doppelschnecken (2.16)

### Bezeichnungen:

### A) Im Zusammenhang mit Stand der Technik

| | | |
|---|---|---|
| CA | Förderluft | (Conveying Air) |
| DA | Dosierluft | (Dosing Air) |
| FA | Fluid- Luft | (Fluidising Air) |
| FP | Fluid-Plate | (Fluid Plate) |
| | | |
| Pl | Pulver- Injektor | (Powder Injector) |
| PC | Pulver- Behälter | (Powder Container) |
| PS | Pulvernachschub | (Powder Supply) |
| PH | Pulverschlauch | (Powder Hose) |
| PP | Pulver -Kolben | (Powder Piston) |
| PV | Pulverventil | (Powder Valve) |
| PA | Pulver + Luft | (Powder + Air) |
| | | |
| SR | Rührwerk | (Stirrer) |
| ST | Saugrohr | (Suction Tube) |
| SF | Schneckenförderer | (Screw Feeder) |
| | | |
| AC | Luftmengensteuerung | (Air Control) |
| AE | Entlüftung | (Air Exhaust) |

### B.) im Zusammenhang mit Patentansprüchen

### 1. Pulverbehälter

- 1.1: Fluidisiertes Pulver
- 1.2: Unfluidisiertes Pulver
- 1.3: Dosiertes Pulver
- 1.4: Fluid- Platte
- 1.5: Seitenwand

### 2. Schneckenförder- Einheit

- 2.1: Förderschnecke
- 2.2: Förderrohr mit trichterförmigem Einlauf
- 2.3: Förderrohr
- 2.4: Einlauftrichter
- 2.5: Einlaufstück
- 2.6: Einlaufrohr, gerade
- 2.7: Einlaufrohr, gekröpft
- 2.8: Auslaufrohr, zylindrisch oder leicht konisch
- 2.9: Kupplung
- 2.10: Schnellkupplung
- 2.11: Gelenk
- 2.12: Schneckenantrieb
- 2.13: Lauf- Dichtung
- 2.14: Stopfen
- 2.15: Fluid - Luftanschluss
- 2.16: Doppel- Förderschnecke

### 3. Füllstand - Regelsystem

- 3.1: Vorrats- Pulverbehälter
- 3.2: Pulver- Ventil
- 3.3: Förderluft - Anschluss
- 3.4: Füllstand- Sensor
- 3.5: Füllstand- Steuerung

### 4. Wiegesysteme

- 4.1: Kalibrierwaage
- 4.2: Timer - Antriebssteuerung mit manueller Kalibrierung ohne Wiegezelle (4.3)
- 4.3: Wiegezelle
- 4.4: Förderband
- 4.5: Trichter nach Förderband
- 4.6: Pulvermengen - Antriebsregelung mit Wiegezelle (4.3)
- 4.7: Pulverfluss - Antriebsregelung mit Förderband (4.4) und Wiegezelle (4.3)

### 5. Pulver- Durchflussmessung

- 5.1: kapazitiver, induktiver oder optischer Sensor
- 5.2: Pulver - Durchfluss- Regelung

### 6. Zellenrad- Schleuse

- 6.1: Zellenrad
- 6.2: Förderluft - Anschluss

### 7. Pfropfen- Fördersystem

- 7.1: Pulver- Ventil 1
- 7.2: Pulver- Ventil 2
- 7.3: Rückschlag- Pulver- Ventil 1
- 7.4: Rückschlag- Pulver- Ventil 2
- 7.5: Förderluft- Anschluss 1
- 7.6: Förderluft- Anschluss 2
- 7.7: Ventil - Steuerung

## Patentansprüche

1. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) im unteren Bereich des Pulverbehälters (1) horizontal oder geneigt in die Seitenwand (1.5) des Pulverbehälters (1) eingebaut sind gemäss FIG. 1, und das Förderrohr (2.2) im Einlaufbereich trichterförmig gestaltet wird , damit die Förderschnecke (2.1) stets von oben mit unfluidisiertem Pulver (1.2) versorgt wird und eine Beeinflussung der Pulverzufuhr durch aufsteigendes fluidisiertes Pulver (1.1) ausgeschlossen ist.

2. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) im unteren Bereich des Pulverbehälters (1) horizontal oder geneigt in die Seitenwand (1.5) des Pulverbehälters (1) eingebaut sind gemäss FIG. 2, und das Förderrohr (2.3) im Einlaufbereich mit einem separaten Einlauf trichter (2.4) versehen wird, damit die Förderschnecke (2.1) stets von oben mit unfluidisiertem Pulver (1.2) versorgt wird und eine Beeinflussung der Pulverzufuhr durch aufsteigendes fluidisiertes Pulver (1.1) ausgeschlossen ist.

3. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) im unteren Bereich des Pulverbehälters (1) horizontal oder geneigt in die Seitenwand (1.5) des Pulverbehälters (1) eingebaut sind gemäss FIG. 3, und das Förderrohr (2.2) im Einlaufbereich trichterförmig gestaltet wird , damit die Förderschnecke (2.1) stets von oben mit unfluidisiertem Pulver (1.2) versorgt wird und eine Beeinflussung der Pulverzufuhr durch aufsteigendes fluidisiertes Pulver (1.1) auszuschliessen und die Förderschnecke (2.1) über eine Schnellkupplung (2.10) sowie ein Gelenk (2.11) abgewinkelt mit dem Schneckenantrieb (2.12) verbunden ist, um eine schnelle Montage/Demontage der Förderschnecke (1.1) zu ermöglichen, indem die Schnell-Kupplung (2.10) gelöst wird.

4. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) im unteren Bereich des Pulverbehälters (1) horizontal oder geneigt in die Seitenwand (1.5) des Pulverbehälters (1) eingebaut sind gemäss FIG. 4 , und das Förderrohr (2.3) im Einlaufbereich mit einem separaten Einlauftrichter (2.4) versehen wird, damit die Förderschnecke (2.1) stets durch unfluidisiertes Pulver (1.2) bedeckt ist , um eine Beeinflussung der Pulverzufuhr durch aufsteigendes fluidisiertes Pulver (1.1) auszuschliessen und die Förderschnecke (2.1) über eine Schnellkupplung (2.10) sowie ein Gelenk (2.11) abgewinkelt mit dem Schneckenantrieb (2.12) verbunden ist, um eine schnelle Montage/ Demontage der Förderschnecke (2.1) zu ermöglichen, indem die Schnellkupplung (2.10) gelöst wird.

5. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) unterhalb des Pulverbehälters (1) horizontal der geneigt installiert sind gemäss FIG. 5 und über ein gerades Einlaufrohr (2.6), das durch die Fluid- Platte (1.4) geführt wird , mit unfluidisiertem Pulver (1.2) versorgt werden, wobei der Schneckenantrieb (2.12) zugseitig angeordnet ist und das Einlaufstück (2.5) mit einem Stopfen (2.14) versehen wird ,um eine schnelle Montage/ Demontage der Förderschnecke (1.1) zu ermöglichen, indem der Stopfen (2.14) entfernt wird.

6. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) unterhalb des Pulverbehälters (1) horizontal oder geneigt installiert sind gemäss FIG. 6 und über ein gerades Einlaufrohr (2.8), das durch die Fluid- Platte (1.4) geführt wird , mit unfluidisiertem Pulver (1.2) versorgt werden, wobei der Schneckenantrieb (2.12) druckseitig angeordnet ist, um eine schnelle Montage/ Demontage der Förderschnecke (2.1) zu ermöglichen und das Einlaufstück (2.5) mit einer Lauf -Dichtung (2.13) versehen wird.

7. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) unterhalb des Pulverbehälters (1) horizontal oder geneigt installiert sind gemäss FIG. 7 und über ein gekröpftes Einlaufrohr (2.7) , das durch die Seitenwand (1.5) des Pulverbehälters (1) geführt wird , mit unfluidisiertem Pulver (1.2) versorgt werden, wobei der Schneckenantrieb (2.12) zugseitig angeordnet ist und das Einlaufstück (2.5) mit einem Stopfen (2.14) versehen wird ,um eine schnelle Montage/ Demontage der Förderschnecke (1.1) zu ermöglichen, indem der Stopfen (2.14) entfernt wird.

8. Dosiersystem zum Austragen feiner Pulver aus einem fluidisierten Pulverbehälter (1) mit mehreren Schneckenförder- Einheiten (2), **dadurch gekennzeichnet, dass**
die Schneckenförder- Einheiten (2) unterhalb des Pulverbehälters (1) horizontal oder geneigt installiert sind gemäss FIG. 8 und über ein gekröpftes Einlaufrohr (2.7) , das durch die Seitenwand (1.5) des Pulverbehälters (1) geführt wird , mit unfluidisiertem Pulver (1.2) versorgt werden, wobei der Schneckenantrieb (2.12) druckseitig angeordnet ist, um eine schnelle Montage/ Demontage der Förderschnecke (2.1) zu ermöglichen und das Einlaufstück (2.5) mit einer LaufDichtung (2.13) versehen wird.

9. Pulverdosiersystem, bestehend im wesentlichen aus einem fluidisierten Pulverbehälter (1), bestückt mit mehreren Schneckenförder- Einheiten (2) gemäss Anspruch 5 - 8 , **dadurch gekennzeichnet, dass**
das Einlaufrohr (2.6) gemäss FIG. 9 mit einem Fluid- Luftanschluss (2.15) versehen wird, um unfluidisiertes Pulver (1.2) aufzulockern, wenn dies erforderlich ist.

10. Pulverdosiersystem, bestehend im wesentlichen aus einem fluidisierten Pulverbehälter (1), bestückt mit mehreren Schneckenförder- Einheiten (2) gemäss Anspruch 1 - 9 , sowie einem Füllstandregelsystem (3), **dadurch gekennzeichnet, dass**
der Füllstand mit dem Füllstandregelsystem (3) bestehend aus Vorrats-Pulverbehälter (3.1), Quetschventil (3.2), Füllstand- Sensor (3.3) und Steuerung (3.4) nach dem Schwerkraft - Prinzip gemäss FIG. 10 möglichst konstant gehalten wird.

11. Pulverdosiersystem, bestehend im wesentlichen aus einem fluidisierten Pulverbehälter (1), bestückt mit mehreren Schneckenförder- Einheiten (2) gemäss Anspruch 1 - 9 , sowie einem Füllstandregelsystem (3), **dadurch gekennzeichnet, dass**
der Füllstand mit dem Füllstandregelsystem (3) bestehend aus Vorrats-Pulverbehälter (3.1) , Quetschventil (3.2), Füllstand- Sensor (3.3) und Steuerung (3.4) nach dem Pfropfenförder- Prinzip gemäss FIG. 11 möglichst konstant gehalten wird.

12. Pulverdosiersystem , bestehend im wesentlichen aus einem fluidisierten Pulverbehälter (1), bestückt mit mehreren Schneckenförder- Einheiten (2) gemäss Anspruch 1- 11 , **dadurch gekennzeichnet, dass**
ein konstanter Pulverfluss oder eine bestimmte Fördermenge durch einen Timer-Antriebssteuerung (4.2) bestimmt wird, indem der gravimetrische Pulverfluss oder die Fördermenge vorher durch Kalibrieren mit einer Kalibrierwaage (4.1) ermittelt wird gemäss FIG. 12

13. Pulverdosiersystem , bestehend im wesentlichen aus einem fluidisierten Pulverbehälter (1), bestückt mit mehreren Schneckenförder- Einheiten (2) gemäss Anspruch 1- 11 , **dadurch gekennzeichnet, dass**
unterhalb des Auslaufrohres (2.8) eine Wiegezelle (4.3) installiert wird gemäss FIG. 13 und die gravimetrische Fördermenge über die Antriebsregelung (4.6) geregelt wird.

14. Pulverdosiersystem , bestehend im wesentlichen aus einem fluidisierten Pulverbehälter (1), bestückt mit mehreren Schneckenförder- Einheiten (2) gemäss Anspruch 1- 11 , **dadurch gekennzeichnet, dass**
unterhalb des Auslaufrohres (2.8) ein Förderband (4.4) mit Wiegezelle (4.3) installiert wird gemäss FIG. 14 und der gravimetrische Pulverfluss über die Antriebsregelung (4.7) kontinuierlich geregelt wird.

15. Pulverdosiersystem, bestehend im wesentlichen aus einem fluidisierten Pulverbehälter (1), bestückt mit mehreren Schneckenförder- Einheiten (2) gemäss Anspruch 1 - 11 , **dadurch gekennzeichnet, dass**
unterhalb des Auslaufrohres (2.8) gemäss FIG. 15 ein optischer, induktiver oder kapazitiver Sensor (5) installiert wird für Überwachungs- oder Regelzwecke und Alarm ausgelöst wird, wenn zu wenig Pulver fliesst oder die Fördermenge geregelt wird mit dem Schneckenantrieb (2.12) und der Pulverfluss- Regelung (6).

16. Pulverdosiersystem, bestehend im wesentlichen aus einem fluidisierten Pulverbehälter (1), bestückt mit mehreren Schneckenförder- Einheiten (2) gemäss Anspruch 1 - 13 , **dadurch gekennzeichnet, dass**
das Auslaufrohr (2.8) gemäss FIG. 16 im unteren Bereich mit einer Pulverpumpe (4) versehen wird, wobei die Förderluft quer oder geneigt zum Auslaufrohr (2.8) eingeblasen wird , um das dosierte Pulver (1.3) in einem Schlauch gleichmässig kontinuierlich weiterzufördern.

17. Pulverdosiersystem, bestehend im wesentlichen aus einem fluidisierten Pulverbehälter (1), bestückt mit mehreren Schneckenförder- Einheiten (2) gemäss Anspruch 1 - 13, **dadurch gekennzeichnet, dass**
das Auslaufrohr (2.3) gemäss FIG. 17 in Längsrichtung des Auslaufrohres (2.8) mit Förderluft beaufschlagt wird, um das dosierte Pulver (1.3) in einem Schlauch gleichmässig kontinuierlich weiterzufördern.

18. Pulverdosiersystem, bestehend im wesentlichen aus einem fluidisierten Pulverbehälter (1), bestückt mit mehreren Schneckenförder- Einheiten (2) gemäss Anspruch 1 - 15, **dadurch gekennzeichnet, dass**
das Auslaufrohr (2.3) gemäss FIG. 18 im unteren Bereich mit einer angetriebenen Zellradschleuse (4.1) versehen wird, damit der Druck der Förderluft (CA) über den Förderluftanschluss (4.2) erhöht werden kann.

19. Pulverdosiersystem, bestehend im wesentlichen aus einem fluidisierten Pulverbehälter (1), bestückt mit einer geraden Zahl von Schneckenförder- Einheiten (2) gemäss Anspruch 1 - 15 , sowie einem Pfropfen- Fördersystem (4) **dadurch gekennzeichnet, dass**
jeweils ein Auslaufrohr (2.8) mit dem Pulverventil (4.1) und dem Rückschlag-Pulverventil (4.3) und das andere Auslaufrohr (2.8) mit dem Pulverventil (4.2) und dem Rückschlag- Pulverventil (4.4) zusammengeführt werden gemäss FIG. 19 und mit der Förderluft (4.5 resp. 4.6) der Pfropfensteuerung (4.7) abwechslungsweise so gesteuert werden, dass das dosierte Pulver (1.3) in gleichmässigem Takt mit hohem Druck weitergefördert werden kann.

20. Pulverdosiersystem nach Anspruch 1-19, **dadurch gekennzeichnet, dass**
der Pulverbehälter (1) gemäss FIG. 19 mit Doppel- Schneckenförderer (2.16) bestückt wird.

21. Pulverdosiersystem nach Anspruch 1 - 19, **dadurch gekennzeichnet, dass**
der Pulverbehälter (1) mit einer einzigen Schneckenförder- Einheit (2) mit einfacher Förderschnecke (2.1) oder einer Doppel- Förderschnecke (2.16) bestückt ist.
